# EUROPEAN PATENT SPECIFICATION

(11) **EP 0 531 975 B1**
(45) Date of publication and mention of the grant of the patent: **13.12.1995**
(21) Application number: 92115429.0
(22) Date of filing: 09.09.1992
(51) Int. Cl.: C08L 21/00, C08K 3/04

(54) **Rubber composition**
Kautschukzusammensetzung
Composition de caoutchouc

(30) Priority: 13.09.1991 JP 261280/91
(43) Date of publication of application: 17.03.1993
(73) Proprietor: Bridgestone Corporation, Tokyo 104 (JP)
(72) Inventor: Yamada, Hiroshi, Kodaira-shi, Tokyo (JP); Ohashi, Masayuki, Suginami-ku, Tokyo (JP)
(74) Representative: Goetz, Rupert, Dipl.-Ing.

(56) References cited:
- WO-A-91/12202
- WO-A-91/17114
- FR-A- 2 649 986
- FR-A- 2 649 986

## Description

### BACKGROUND OF THE INVENTION

### Field of the Invention

The present invention relates to a rubber composition, and more particularly, to a rubber composition having excellent abrasion resistance and low heat generation property.

### Description of the Related Art

Heretofore, low heat generation of rubber has been attained by using a low reinforcing carbon black having a low specific surface area as the necessary carbon black or decreasing the content of carbon black in the rubber composition.

On the other hand, for the purpose of improving abrasion resistance, there is used a highly reinforced carbon black having a high specific surface area, or the content of carbon black in the rubber composition is increased.

Since these conditions are contradictory to one another, when retaining low heat generation property is contemplated, abrasion resistance is lowered. On the contrary, when abrasion resistance is improved, low heat generation property is deteriorated.

It is not possible to make the two characteristics compatible by conventional means. Therefore, it has been demanded to develop rubber compositions possessing simultaneously the two characteristics.

Japanese Patent Application Laid-open No. Hei 3-50249 discloses a rubber composition having both high resilience and abrasion resistance which comprises 100 parts by weight of a rubber component and 30 - 100 parts by weight of carbon black belonging to a hard system region having nitrogen adsorption specific surface area (N₂SA) of 58 - 139 m2/g and DBP oil absorption amount of 90 - 150 ml/100 g, and possessing a selective characteristic that the gap size among particles Dp (nm) determined by a mercury pressing-into method is a value calculated by the formula, {-0.22 x (N₂SA) + 60.8}, or more.

### SUMMARY OF THE INVENTION

An object of the present invention is to provide a rubber composition having both excellent abrasion resistance and excellent low heat generation property.

According to the present invention, there is provided a rubber composition which comprises 100 parts by weight of at least one rubber component selected from the group consisting of natural rubber and diene type synthetic rubbers and 20 - 70 parts by weight of carbon black having:
(i) cetyltrimethyl ammonium bromide adsorption specific surface area (CTAB) of 60 - 110 m²/g,
(ii) DBP oil absorption amount of 135 - 200 ml/100 g,
(iii) the ratio of CTAB (m²/g)/IA (mg/g) of 1.15 - 1.40 where IA is an iodine adsorption amount, and
(iv) an average aggregate gap diameter (Dm angstrom) of -4.00 x [CTAB (m²/g)] + 767 or more.

### DESCRIPTION OF THE PREFERRED EMBODIMENTS

The present inventors have studied colloidal characteristics of carbon black and found that in the case of a carbon black having a certain range of specific surface area and a certain range of structure size, low heat generation property of a rubber composition containing the carbon black can be improved, while retaining the abrasion resistance corresponding to the same specific surface area, by increasing the aggregate gap diameter simultaneously with defining the value of the diameter in connection with CTAB which is a specific surface area determined by using a high molecular weight adsorbed molecule.

According to the present invention, as the rubber component, there may be used natural rubber and/or diene type synthetic rubbers.

Exemplary suitable diene type synthetic rubbers used in the present invention are isoprene rubber, butadiene rubber, butyl rubber and styrene-butadiene copolymer rubber.

Among various characteristic values of carbon black used in the present invention, CTAB is determined according to ASTM D3765 - 89 and DBP according to JIS K 6221 - 1982 A.

Dm is determined by pressing mercury into carbon black at a pressure starting from 110.316·10³ Pa to 20.684·10⁷ Pa (16 psi up to 30000 psi) by means of a mercury porosimeter manufactured by Micromeritics Co. (tradename, Pore Sizer 9310) to measure the aggregate gap diameter, plotting an intrusion volume distribution curve with respect to each aggregate diameter, and defining a gap diameter giving the maximum differential intrusion volume as an average aggregate gap diameter, Dm.

In the present invention, when CTAB is less than 60 m²/g, the abrasion resistance is markedly lowered. On the contrary, when CTAB exceeds 110 m²/g, the low heat generation property is deteriorated to a great extent. Therefore, according to the present invention, CTAB ranges from 60 to 110 m²/g, preferably from 70 to 100 m²/g.

DBP less than 135 ml/100 g. indicates that the aggregate inner intrusion volume is small, and at this DBP, both the low heat generation property and the abrasion resistance are deteriorated.
On the contrary, when DBP exceeds 200 ml/100 g, workability in rubber kneading deteriorates to a great extent. Therefore, in the present invention, DBP ranges from 135 ml/100 g to 200 ml/100 g, preferably from 150 ml/100 g to 190 ml/100 g.

When CTAB/IA is less than 1.15, the low heat generation is remarkably poor. On the contrary, when CTAB/IA exceeds 1.40, workability in rubber kneading deteriorates markedly. Therefore, in the present invention, CTAB/IA is 1.15 - 1.40, preferably 1.20 - 1.35.

When Dm (angstrom) is less than the value of -4.00 x [CTAB (m²/g)] + 767, the aggregate intrusion volume is small and therefore, the low heat generation property becomes markedly poor. Therefore, according to the present invention, Dm is the value of the above-mentioned formula or more.

Dm preferably ranges from -4.00 x [CTAB (m²/g)] + 767 to -4.00 x [CTAB (m²/g)] + 880.

Carbon black of the present invention may be produced by treating a raw material having a high content of aromatic components in a reaction furnace according to an ordinary oil furnace method while controlling the production reaction speed, reaction time, combustion gas flow rate and raw material oil concentration at a choke portion.

The compounding ratio of carbon black to the rubber component is 20 - 70 parts by weight to 100 parts by weight. When carbon black is less than 20 parts by weight in the compounding ratio, the abrasion resistance can not be enhanced. On the contrary, when carbon black exceeds 70 parts by weight in said ratio, it is difficult to retain low heat generation property.

Upon kneading rubber with carbon black, naturally there may be compounded additives such as vulcanizer, vulcanization accelerator, antioxidant, softener, plasticizer and the like in ordinary amounts used.

With respect to reinforcing rubber with high structure fillers, there is known a concept of "occluded rubber" which means "rubber having entered the inner gap space of the structure aggregate".

Occluded rubber has a special property that it is partly shielded from deformation even when rubber is subjected to deformation as a whole.

On the other hand, certain type of carbon black has fine pores of several angstrom in size over a large portion of the whole surface and rubber can not enter such fine pores. Therefore, the nitrogen adsorption specific surface area does not correspond to the inner gap space which rubber can enter.

On the contrary, a specific surface area such as CTAB measured by using a large adsorption molecule can most appropriately express the inner gap space which rubber can enter.

The reason for the surprising technical advantage capable of giving simultaneously both excellent abrasion resistance and excellent low heat generation property in the present invention appears to be as shown below.

Although it is not desired to limit the invention to any particular theory, it is believed that there is used carbon black composed of structure aggregate having inner gap space which rubber can enter and thereby, the abrasion resistance can be retained at a high level and the molecular chains of rubber molecules having entered the space deeply extend into the rubber matrix and can freely mix with rubber molecules, and as a result, the rubber effectively function to retain low heat generation property.

The invention is now more particularly described with reference to the following examples which are for the purpose of illustration only and are intended to imply no limitation thereon.

### EXAMPLES 1 - 5 and COMPARISON EXAMPLES 1 - 3

To a rubber composition composed of 30 parts by weight of natural rubber and 70 parts by weight of a styrene-butadiene copolymer rubber were added 45 or 40 parts by weight of carbon black of which characteristic values are shown in Table 1 and Table 2, 3 parts by weight of stearic acid, 5 parts by weight of ZnO, 2 parts by weight of Antioxidant 6C, 0.6 part by weight of Vulcanization accelerator CZ and 1.5 parts by weight of sulfur, and the resulting mixture was kneaded and vulcanized.

The rubber sample thus obtained was evaluated for the abrasion resistance by measuring Lambourn abrasion index and the low heat generation property by measuring tan δ index.

The formulations of the rubber sample and the evaluation results are shown in Table 1 and Table 2.

The Lambourn abrasion index as an abrasion resistance test was measured.
The index of the prior art example was assumed to be 100. The larger said index value, the better the abrasion resistance.

The internal loss (tan δ) was measured by using a viscoelastic spectrometer manufactured by Iwamoto Seisakusho K.K. under conditions:
tensile dynamic strain of 1 %, frequency of 50 Hz and temperature of 50°C.

The test piece was a slab sheet of about 2 mm thick and 5 mm wide, and the nipping distance of the test piece was 2 cm and the inital load was 100 g.

The tan δ indix, as a measure of low heat generation property, of the prior art example was assumed to be 100. The smaller the tan δ, the better the low heat generation property.

**Table 1**

| | Prior art example | Example No. | | | | |
|---|---|---|---|---|---|---|
| | | 1 | 2 | 3 | 4 | 5 |
| Natural rubber | 30 | 30 | 30 | 30 | 30 | 30 |
| SBR ^{*1} | 70 | 70 | 70 | 70 | 70 | 70 |
| Carbon Black | 45 | 45 | 45 | 40 | 45 | 40 |
| Stearic acid | 3 | 3 | 3 | 3 | 3 | 3 |
| Zn O | 5 | 5 | 5 | 5 | 5 | 5 |
| Antioxidant 6C ^{*2} | 2 | 2 | 2 | 2 | 2 | 2 |
| Vulcanization accelerator CZ ^{*3} | 0.6 | 0.6 | 0.6 | 0.6 | 0.6 | 0.6 |
| Sulfur | 1.5 | 1.5 | 1.5 | 1.5 | 1.5 | 1.5 |
| Type of carbon | N 339^{*4} | A | B | B | C | C |
| CTAB (m²/g) | 95 | 70 | 78 | 78 | 83 | 83 |
| IA (mg/g) | 90 | 58 | 61 | 61 | 69 | 69 |
| CTAB/IA ratio | 1.06 | 1.21 | 1.28 | 1.28 | 1.20 | 1.20 |
| DBP (ml/100g) | 120 | 140 | 152 | 152 | 171 | 171 |
| Dm (Angstrom) | 381 | 501 | 521 | 521 | 525 | 525 |
| -4.00xCTAB+767 | 387 | 487 | 455 | 455 | 435 | 435 |

| Physical properties | | | | | | |
|---|---|---|---|---|---|---|
| Lambourn abrasion index | 100 | 111 | 135 | 114 | 119 | 112 |
| tan δ (Index) | 100 | 84 | 82 | 76 | 89 | 77 |

| | | | | | | |
|---|---|---|---|---|---|---|
| *1 SBR # 1500 (tradename, manufactured by Japan Synthetic Rubber Co.) | | | | | | |
| *2 N-(1,3-dimethylbutyl)-N'-phenyl-p-phenylenediamine | | | | | | |
| *3 N-cyclomethyl-2-benzothiazylsulfenamide | | | | | | |
| *4 Seast KH (tradename, manufactured by Tokai Carbon K.K.) | | | | | | |

**Table 2**

| | Comprison Example No. | | |
|---|---|---|---|
| | 1 | 2 | 3 |
| Natural rubber | 30 | 30 | 30 |
| SBR ^{*1} | 70 | 70 | 70 |
| Carbon Black | 45 | 45 | 45 |
| Stearic acid | 3 | 3 | 3 |
| Zn O | 5 | 5 | 5 |
| Antioxidant 6C ^{*2} | 2 | 2 | 2 |
| Vulcanization accelerator CZ ^{*3} | 0.6 | 0.6 | 0.6 |
| Sulfur | 1.5 | 1.5 | 1.5 |
| Type of carbon | D | E | F |
| CTAB (m²/g) | 88 | 82 | 115 |
| IA (mg/g) | 84 | 87 | 115 |
| CTAB/IA ratio | 1.05 | 0.943 | 1.00 |
| DBP (ml/100g) | 150 | 111 | 121 |
| Dm (Angstrom) | 410 | 362 | 330 |
| -4.00xCTAB+767 | 415 | 439 | 307 |

| Physical properties | | | |
|---|---|---|---|
| Lambourn abrasion index | 93 | 107 | 124 |
| tan δ (Index) | 95 | 111 | 110 |

| | | | |
|---|---|---|---|
| *1, *2, and *3 are the same as those in Table 1. | | | |

As is clear from Table 1 and Table 2 above, the rubber compositions of the present invention as shown in the Examples have both excellent abrasion resistance and excellent low heat generation property.

That is, Examples 1 - 5 in Table 1 exhibit better abrasion resistance and low heat generation property than the Prior art example exhibits.

In Table 2, Comparison Example 1 exhibits better low heat generation, but poorer abrasion resistance than the Prior art example while Comparison Examples 2 and 3 exhibit better abrasion resistance, but poorer low heat generation property than the Prior art example exhibits.

## Claims

1. A rubber composition which comprises 100 parts by weight of at least one rubber component selected from the group consisting of natural rubber and diene type synthetic rubbers and 20 - 70 parts by weight of carbon black having:
(i) cetyltrimethyl ammonium bromide adsorption specific surface area (CTAB) of 60 - 110 m²/g,
(ii) DBP oil absorption amount of 135 - 200 ml/100 g,
(iii) the ratio of CTAB (m²/g)/IA (mg/g) of 1.15 - 1.40 where IA is an iodine adsorption amount, and
(iv) an average aggregate gap diameter (Dm angstrom) of -4.00 x [CTAB (m²/g)] + 767 or more.

2. The rubber composition according to claim 1 in which the cetyltrimethyl ammonium bromide adsorption specific surface area (CTAB) is 70 - 100 m²/g.

3. The rubber composition according to claim 1 in which the DBP oil absorption amount is 150 - 190 ml/100 g.

4. The rubber composition according to claim 1 in which the ratio of CTAB (m²/g)/IA (mg/g) is 1.20 - 1.35.

5. The rubber composition according to claim 1 in which the average aggregate gap diameter (Dm angstrom) ranges from
-4.00 x [CTAB (m²/g)] + 767 to
-4.00 x [CTAB (m²/g)] +880.

## Patentansprüche

1. Gummizusammensetzung, die 100 Gew.-Teile mindestens eines Gummibestandteils aufweist, ausgewählt aus der Gruppe bestehend aus natürlichem Gummi und synthetischen Gummis vom Dien-Typ, und 20 bis 70 Gew.-Teile Ruß mit:
(i) einer spezifischen Oberfläche der Cetyltrimethylammoniumbromid-Adsorption von 60 - 110 m²/g,
(ii) einer DBP-Ölabsorptionsmenge von 135 - 200 ml/100 g,
(iii) einem Verhältnis CTAB (m²/g)/IA (mg/g) von 1,15 - 1,40, wobei IA eine Iodadsorptionsmenge angibt, und
(iv) einem durchschnittlichen Aggregatspaltdurchmesser (Dm Angström) von - 4,00 x [CTAB (m²/g)] + 767 oder darüber.

2. Gummizusammensetzung nach Anspruch 1, wobei die spezifische Oberfläche der Cetyltrimethylammoniumbromid-Adsorption (CTAB) 70 - 100 m²/g ist.

3. Gummizusammensetzung nach Anspruch 1, wobei die DBP-Ölabsorptionsmenge 150 - 190 ml/g ist.

4. Gummizusammensetzung nach Anspruch 1, bei der Verhältnis CTAB (m²/g)/IA (mg/g) 1,20 - 1,35 ist.

5. Gummizusammensetzung nach Anspruch 1, wobei der durchschnittliche Aggregatspaltdurchmesser (Dm Angström) im Bereich von
- 4,00 x [CTAB (m²/g)] + 767 bis
- 4,00 x [CTAB (m²/g)] + 880 liegt.

## Revendications

1. Composition de caoutchouc qui comprend 100 parties en poids d'au moins un constituant de caoutchouc choisi parmi le caoutchouc naturel et les caoutchoucs synthétiques du type diène et 20-70 parties en poids de noir de carbone ayant :
(i) une surface spécifique d'adsorption du bromure de cétyltriméthylammonium (CTAB) de 60-110 m²/g,
(ii) une absorption d'huile DBP de 135-200 ml/100 g,
(iii) un rapport CTAB (m²/g)/IA (mg/g) de 1,15-1,40, où IA est la quantité d'adsorption d'iode et
(iv) un diamètre moyen d'intervalle des agrégats (Dm, en Å) de -4,00 x [CTAB (m²/g)] + 767 ou plus.

2. Composition de catouchouc selon la revendication 1, dans laquelle la surface spécifique d'adsorption du bromure de cétyltriméthylammonium (CTAB) est de 70-100 m²/g.

3. Composition de caoutchouc selon la revendication 1, dans laquelle l'absorption d'huile DBP est de 150-190 ml/100 g.

4. Composition de caoutchouc selon la revendication 1, dans laquelle le rapport CTAB (m²/g)/IA (mg/g) est de 1,20-1,35.

5. Composition de caoutchouc selon la revendication 1, dans laquelle le diamètre moyen de l'intervalle d'agrégat (Dm, en Å) est de
-4,00 x [CTAB (m²/g)] + 767 à
-4,00 x [CTAB (m²/g)] + 880.
